Europäisches Patentamt

European Patent Office

Office européen des brevets

(11) Veröffentlichungsnummer: **0 678 550 A2**

(12) **EUROPÄISCHE PATENTANMELDUNG**

(21) Anmeldenummer: **95105698.5**

(22) Anmeldetag: **15.04.95**

(51) Int. Cl.6: **C08K 5/13**, C08L 25/06

(30) Priorität: **22.04.94 DE 4414043**

(43) Veröffentlichungstag der Anmeldung:
**25.10.95 Patentblatt 95/43**

(84) Benannte Vertragsstaaten:
**BE DE ES FR GB IT NL**

(71) Anmelder: **BASF AKTIENGESELLSCHAFT**

**D-67056 Ludwigshafen (DE)**

(72) Erfinder: **Schwaben, Hans-Dieter, Dr.**
**Lindenstrasse 6a**
**D-67361 Freisbach (DE)**
Erfinder: **Bender, Dietmar, Dr.**
**An der Kuhstrasse 4**
**D-67459 Böhl-Iggelheim (DE)**
Erfinder: **Hedtmann-Rein, Carola, Dr.**
**Hauptstrasse 23**
**D-68526 Ladenburg (DE)**
Erfinder: **Moors, Rainer, Dr.**
**Danziger Strasse 5**
**D-76726 Germersheim (DE)**
Erfinder: **Jung, Andreas, Dr.**
**R 4.3**
**D-68161 Mannheim (DE)**
Erfinder: **Schlichtmann, Rainer,**
**Buergermeister-Horlacher-Str. 55**
**D-67067 Ludwigshafen (DE)**

(54) **Stabilisierung von Polystyrol durch phenolische Stabilisatoren.**

(57) Formmasse enthaltend, neben Polystyrol als wesentlichem Bestandteil, weniger als 250 ppm Styrol und 0,05 - 0,5 Gew.-% mindestens eines phenolischen Antioxidans wie 2,4,6-tri-substituiertes Phenol sowie Verfahren zur Stabilisierung von Polystyrol mit einem Gehalt von weniger als 250 ppm Styrol gegen die Neubildung von Styrol unter Wärmeeinwirkung.

EP 0 678 550 A2

Standardpolystyrol (PS) ist ein einfach zu verarbeitender Werkstoff, der aufgrund seiner ausgewogenen Eigenschaftskombination aus hoher Steifigkeit, guter Wärmeformbeständigkeit und brillanter Transparenz in einer Fülle von Verpackungsanwendungen zum Einsatz kommt.

Die thermooxidative Beständigkeit von PS ist so hoch, daß es für die überwiegende Anzahl der Anwendungen ohne Antioxidanszusätze eingesetzt wird. Thermooxidative Schädigungen treten erfahrungsgemäß auf, wenn das Material wiederholt verarbeitet wird, z.B. bei der Wiederverwertung von Produktionsabfällen, die bei der Herstellung thermogeformter Artikel anfallen. Speziell bei der Wiederverarbeitung von Schaumfolien aus PS bedient man sich gewisser Stabilisatoren, um den mit der thermooxidativen Schädigung einhergehenden Abbau des Molekulargewichts zu reduzieren. Damit können Veränderungen der Schaumstruktur verhindert werden. (Taschenbuch der Kunststoffadditive; herausgegeben von Gächter/Müller, 3. Auflage, Carl Hanser Verlag München, Wien, Seite 75/76).

Großtechnisch wird PS durch radikalische Polymerisation von Styrol entweder rein thermisch oder mittels Initiatoren wie z.B. Peroxiden hergestellt.

Weil die Polymerisation nicht vollständig zu Ende, d.h. bis zu einem Umsatz von 100 % geführt werden kann, und auch in der anschließenden Entmonomerisierung die Entfernung von nicht umgesetztem Styrol nicht vollständig gelingt, liegt der Monostyrolgehalt bebräuchlichen Polystyrols i.d.R. zwischen 350 und 1000 ppm. Bei organoleptisch sensitiven Füllgütern, wie Schokolade und Keksen kann auch dieser Restgehalt an Styrol stören. Man ist daher bestrebt, einen möglichst niedrigen Styrolgehalt im Polymerisat einzuhalten. Bei dem konventionellen, radikalischen Polymerisationsverfahren bedient man sich hierzu der sog. Entgasung, bei der mittels Schleppmittel eine Reduktion des Styrolgehaltes auf unter 100 ppm möglich ist (US 3 987 325, EP 359 432). Einsatzgebiete für dieses hochentgaste Polystyrol sind u.a. biaxial orientierte Polystyrolfolien (BOPS-Folien) und thermoformbare Folien aus einer Mischung von solchem hochentgasten Polystyrol mit Styrolbutadienblockcopolymeren.

Nahezu monomerfreies Polystyrol läßt sich mittels anionischer Polymerisation in unpolaren Lösungsmitteln herstellen (APS; < 10 ppm Styrol). Als Initiatoren dienen dabei i.A. metallorganische Verbindungen des Lithiums, wie beispielsweise n-Butyllithium (vgl. M. Swarc: Living Polymers and Mechanism of Anionic Polymerization" in Advances Polymer Science 49, Springer Verlag [1983]).

Somit gelingt es zwar, äußerst styrolarmes Polystyrol herzustellen, man weiß aber (J. Appl. Polym. Sci., 37, S. 1079-1088; US-4 221 905), daß unter thermischer Belastung rasch wieder monomeres Styrol entsteht. Untersuchungen zeigen, daß auch das hochentgaste Polystyrol und APS diese nachteilige Eigenschaft haben.

Infolgedessen gehen die Vorteile des hochentgasten Polystyrols bzw. APS bei der Verarbeitung wieder verloren.

In der US 4 221 905 wird der Zusatz von Myrcen als "Monomerenfänger" für Styrol-Acrylnitril-Copolymerisate und mit Kautschuk schlagzäh modifiziertes Polystyrol beschrieben.

Danach bewirken 0,5 % Myrcen eine Verlangsamung des Wiederanstieges des Styrolgehaltes im schlagzäh-modifizierten Polystyrol, aber für eine praktische Anwendung ist der Anstieg viel zu hoch, insbesondere vor dem Hintergrund, daß die in der US-PS gewählten Verarbeitungsbedingungen als mild anzusehen sind und bekannt ist, daß üblicherweise bei höheren Temperaturen verarbeitet wird; praktisch verläuft die Styrolneubildung also viel schneller als in der US-PS angegeben.

Es stellte sich daher die Aufgabe, Mittel zu finden, die die Neubildung von Styrol bei thermischer bzw. mechanischer Belastung wie z.B. im Scherfeld des Extruders oder einer Spritzgußmaschine unterbinden oder wenigstens zurückdrängen. Unmittelbarer Erfindungsgegenstand ist die in den Ansprüchen näher bezeichnete Formmasse und das dort angegebene Verfahren zu ihrer Herstellung.

Es wurde gefunden, daß - besonders 2,4,6-trisubstituierte - Phenole die Neubildung von Styrol während einer thermischen Belastung von APS deutlich reduzieren. Bevorzugt sind Phenole, die in 2,4,6-Position des Ringes durch Alkylgruppen substituiert sind, wobei Alkylgruppen ggf. Ether- oder Thioethergruppen enthalten können. Ganz besonders bevorzugt ist 2,6-Di-tert.-butyl-4-methylphenol (1). Es zeigt von allen getesteten Verbindungen die beste Stabilisierungswirkung in bezug auf den Aufbau von Styrol. Selbst nach mehrfacher Extrusion bei 280°C in starken Scherfeldern tritt nur eine unter praktischen Gesichtspunkten vernachlässigbar geringe Erhöhung des Styrolgehaltes auf. Der Abbau der Molekülketten, der sich in einem Anstieg der Fließfähigkeit und Absinken des mittleren Molekulargewichts manifestiert, wird dagegen auch bei Verwendung von (1) nur mäßig behindert. Die Wirksamkeit des Stabilisators hängt stark von dessen Struktur ab (vgl. Tabellen 1 und 2).

Die Ergebnisse verdeutlichen, daß die thermooxidative Kettenspaltung und die Monomerabspaltung zwei separate chemische Reaktionen sind. Während der Kettenabbau durch den Stabilisator (1) nur mäßig unterdrückt wird, wird die Monomerabspaltung völlig verhindert.

Die gleichen Ergebnisse wurden mit hochentgastem Polystyrol erhalten. Die Zugabe von 0,3 Gew.-% des Stabilisators (1) unterbindet hier die Neubildung von Styrol vollständig (s. Tab. 5).

Das mittlere Molekulargewicht $\overline{M}_w$ des Polystyrols sollte, um ausreichende mechanische Eigenschaften sicherzustellen, vorzugsweise zwischen 100 000 bis 500 000 g/mol liegen.

Die Konzentration des Stabilisators hat einen entscheidenden Einfluß auf dessen Wirksamkeit. Im Sinne der Erfindung bevorzugt ist eine Konzentration von (1) im Bereich von 0,05 - 0,5 %. Bei niederer Konzentration ist der Stabilisierungseffekt unzureichend. Höhere Konzentration bringt keinen zusätzlichen Effekt. Ganz besonders bevorzugt ist eine Konzentration zwischen 0,2 - 0,4 % (vgl. Tab. 4).

Der Stabilisator kann wahlweise bei der Herstellung des Polymerisats oder bei der Verarbeitung als Konzentrat zugesetzt werden. Für die Meßreihen der Tabellen 2 - 5 wurden die Stabilisatoren unter milden Extrusionsbedingungen als 5 %iges Konzentrat (Masterbatch) in hochentgastem bzw. anionischem Polystyrol in das unstabilisierte Ausgangsprodukt eingearbeitet. Die stabilisierende Wirkung ist praktisch unabhängig von der Art der Zugabe (vgl. Tab. 6). Die Zugabe als Konzentrat hat den Vorteil, daß die Dosierung je nach Anspruch des Verarbeiters flexibel gestaltet werden kann.

Die Zugabe des Stabilisators während der Herstellung des Polystyrols hat dagegen den Vorteil, daß eine homogene Verteilung des Stabilisators erzielt werden kann und außerdem eine Stabilisierung bereits während der Entgasung, die üblicherweise bei Temperaturen über 200°C stattfindet, gewährleistet ist.

Verbindung (1) ist der erfindungsgemäß wirksamste Stabilisator. Seine hohe Flüchtigkeit (der Siedepunkt beträgt 136°C bei 13 mbar) bewirkt allerdings, daß (1) in einem Vakuumentgasungsapparat in erheblichem Maß aus dem Polymeren entfernt wird, wodurch die Wirkung sinkt.

Auch kann es zu Ablagerungen im Entgasungsapparat kommen, die den störungsfreien Betrieb behindern.

Dieses Problem läßt sich durch eine zusätzliche Stabilisierung beheben, der schon bei oder unmittelbar nach der Herstellung des Polymeren eingesetzt wird.

Das Ziel der Stabilisierung mit einem schwerflüchtigen Stabilisator besteht also darin, das Polystyrol gegen die Neubildung von Styrol während der Entgasung, d.h. im Entgasungsapparat und den Rohrleitungen zu stabilisieren.

Bei der Auswahl des schwerflüchtigen Stabilisators kann man auf die in der einschlägigen Literatur beschriebenen Verbindungen (z.B. Gächter/Müller, Seite 42-50) zurückgreifen. Als Anhaltspunkt für die Eignung der Verbindung kann ihr Dampfdruck bei 25°C herangezogen werden, der unterhalb von $5 \cdot 10^{-4}$ Pa liegen sollte.

Beispiele für schwerflüchtige Verbindungen im Sinne der Erfindung sind die nachstehend (Tab. 1) angegebenen Verbindungen 2-11.

Es ist besonders vorteilhaft, bei radikalisch hergestelltem Polystyrol einen schwerflüchtigen Stabilisator in die bereits vorentgaste Polystyrolschmelze (Styrolgehalt weniger als 0,3 Gew.-%) und bei anionischem Polystyrol nach Abbruch der Polymerisation zuzugeben. Die benötigte Menge an Stabilisator liegt im Bereich zwischen 0,05 und 0,5 Gew.-%.

Die Zugabe des Stabilisators in den Polymerisationsreaktor bei der Herstellung von radikalischem Polystyrol ist nicht sinnvoll, weil dann der gewünschte Stabilisierungseffekt nicht auftritt.

Anionisches Polystyrol wurde im kontinuierlich betriebenen Rührkessel in Cyclohexan als Lösungsmittel und mit sek. Butyllithium als Initiator hergestellt. Die Uneinheitlichkeit $\overline{M}_w/\overline{M}_n$ der Produkte lag zwischen 1.9 - 2.2. Das Lösungsmittel wurde aus dem Polystyrol mittels Entgasungsextruder entfernt. Das Restgehalt an Lösungsmittel lag bei allen untersuchten Proben unter 0,1 %.

Als Ausgangsmaterial für die Versuche in Tab. 5 und 6 wurde das BASF-Handelsprodukt Polystyrol KR 2601 verwendet.

Die Herstellung des stabilisatorfreien sowie des Polystyrols, bei dem 0,3 Gew.-% des Stabilisators (7) in der Polymerisation bzw. in vorentgastes Polystyrol mit 0,1 % Styrol zugegeben wurden, erfolgte durch radikalische Polymerisation in einer Reaktorkaskade mit anschließender zweistufiger Entgasung bei hoher Temperatur und niedrigem Druck, wobei in der 2. Entgasungsstufe ein Schleppmittel eingesetzt wurde.

Beurteilung der Thermostabilität mittels Crash-Extrusion

Zur Beurteilung der Thermostabilität wurde die Masse der sogenannten Crash-Extrusion unterworfen. Dabei handelt es sich um eine Extrusion im Doppelschneckenextruder mit einer stark scherenden Schnekkenkombination bei einer Massetemperatur von mindestens 280°C. Die mittlere Verweilzeit im Extruder betrug 72 Sekunden. Um die Belastung noch weiter zu steigern und das Verhalten bei der Wiederverarbeitung von Produktionsabfällen zu simulieren, wurde mehrfach extrudiert.

Untersucht wurden Granulatmischungen aus unstabilisiertem Polystyrol und 1 - 6 % eines 5 %igen Konzentrats des Stabilisators in Polystyrol. In einer zweiten Meßreihe wurden die Granulatmischungen zunächst im Doppelschneckenextruder unter schonenden Bedingungen bei 200°C extrudiert. Die so erhaltenen Compounds wurden dann der Grash-Extrusion unterworfen. Um die Vergleichbarkeit der Meßergebnisse sicherzustellen, wurde das unstabilisierte Referenzmaterial ebenfalls bei 200°C vorextrudiert.

| Extruder ZSK 53 des Fabrikats Werner & Pfleiderer | Drehzahl: 150 Upm |
|---|---|
| Lochscheibe 3 mm<br>Zylinder 1 210°C<br>Zylinder 6 230°C<br>Zylinder 12 260°C<br>Massetemperatur 280°C | Durchsatz: 50 kg/h |

Analytik:

Der Styrolgehalt wurde mittels Head-Space-Gaschromatographie bestimmt.

Zur Ermittlung des Molekulargewichts diente eine GPC-Anlage des Fabrikats Waters mit automatischem Auswertesystem der Fa. Polymer Standards, Mainz.

Als relatives Maß für das Molekulargewicht ist darüber hinaus die Viskositätszahl (VZ) nach DIN 53 727 angegeben, die in Toluol bei 25°C und einer Konzentration von 5 g/l bestimmt wurde.

Tabelle 1

Stabilisatoren

| Nr. | Struktur/chemische Bezeichnung |
|---|---|
| 1 | 2,6-Di-tert.-butyl-4-methyl-phenol |
| 2 | Triethylenglykol-bis-3(3-tert.butyl-4-hydroxy-5-methyl-phenyl)-propionat |
| 3 | 1,6-Hexandiol-bis-(3-(3,5-di-tert.butyl-4-hydroxy-phenyl)-propionat |
| 4 | 4-[[4,6-bis(octylthio)-1,3,5-triazin-2-yl]amino]-2,6-bis(1,1-dimethylethyl)-phenol |
| 5 | Pentaerythrityl-tetrakis[3-(3,5-di-tert.butyl-4-hydroxi-phenyl)-propionat |
| 6 | 2,2'-Thiodiäthylbis-[3-(3,5-di-tert.butyl-4-hydroxi-phenyl)-propionat] |
| 7 | <br><br>Stearyl-[3-(3,5-di-tert.butyl-4-hydroxyphenylpropionat |
| 8 | 1,3,5-tris-(3,5-di-tert.butyl-4-hydroxybenzyl)-2,4,6-trimethylbenzol |
| 9 | <br><br>Calcium-di[(3,5-di-tert.butyl-4-hydroxyphenyl)methyl]-monoethylester-phosphonat |

| Nr. | Struktur/chemische Bezeichnung |
|-----|--------------------------------|
| 10 | OH<br>H₃C—⬡—CH₂SC₈H₁₇<br>CH₂SC₈H₁₇<br><br>2-Methyl-4,6-bis[(octylthio)methyl]phenol |
| 11 | (CH₃)₃C—⬡—CH₂—⬡—C(CH₃)₃<br>OH ... O—C—CH=CH₂ (O)<br>CH₃ ... CH₃<br><br>2-(1,1-Dimethylethyl)-6-[[3-(1,1-dimethylethyl-2-hydroxy-5-methylphenyl]methyl]-4-methylphenyl-propenat(2) |

Tabelle 2

Thermostabilität von anionisch hergestelltem Polystyrol (APS); Prüfung phenolischer Stabilisatoren
Ausgangsmaterial APS: $\overline{M}_w/\overline{M}_n = 2$, $MVR_{200/5} = 2,1$ ml/10 min; 7 ppm Monostyrol, VZ = 102,9 ml/g
$\overline{M}_w = 274000$ g/mol
Crash-Extrusion im Doppelschneckenextruder: Massetemperatur 280°C, mittlere Verweilzeit 72 sec.,
minimale Verweilzeit 70 sec.; maximale Verweilzeit 74 sec.

| Stabilisator-Nr. | Stabilisator-konzentration [%] | Compound* [ppm Styrol] | Zahl der Extrusionen | | |
|---|---|---|---|---|---|
| | | | 1 x [ppm Styrol] | 3 x [ppm Styrol] | 5x [ppm Styrol] |
| | unstabilisiert | 17 | 125 | 195 | 250 |
| 1 | 0,3 | 8 | 7 | 11 | 11 |
| 2 | 0,3 | 7 | 30 | 65 | 80 |
| 3 | 0,3 | 7 | 20 | 35 | 50 |
| 4 | 0,3 | 7 | 13 | 25 | 35 |
| 5 | 0,3 | 7 | 30 | 50 | 65 |
| 6 | 0,3 | 8 | 19 | 30 | 35 |
| 7 | 0,3 | 7 | 25 | 40 | 50 |
| 8 | 0,3 | 7 | 18 | 30 | 45 |
| 9 | 0,3 | 9 | 60 | 85 | 90 |
| 10 | 0,3 | 6 | 9 | 14 | 20 |
| 11 | 0,3 | 7 | 18 | 35 | 40 |

\* Compounds aus 94 % APS und 6 % eines 5 %igen Konzentrats des Stabilisators auf Basis APS. Hergestellt bei einer Massetemperatur von 220°C.

EP 0 678 550 A2

Tabelle 3

Thermostabilität von APS; Prüfung phenolischer Stabilisatoren

Ausgangsmaterial APS: $\overline{M}_w/\overline{M}_n$ = 2, $MVR_{200/5}$= 2,1 ml/10 min; 7 ppm Monostyrol, VZ = 102,9 ml/g

$\overline{M}_w$= 274000 g/mol

Crash-Extrusion im Doppelschneckenextruder: Massetemperatur 280°C, mittlere Verweilzeit (VWZ) 72 sec.; minimale VWZ 70 sec.; maximale VWZ 74 sec.

| Stabilisator-Nr. | Stabilisator-konzentration [%] | MVR 200/5 [ml/10 min] | Compound* VZ** [ml/g] | Zahl der Extrusionen | | |
|---|---|---|---|---|---|---|
| | | | | 5 x MVR 200/5 | 5 x VZ | 5 x $\overline{M}_w$x$10^{-3}$ g/mol |
| | unstabilisiert | 3,7 | 97,3 | 6,9 | 81,0 | 197 |
| 1 | 0,3 | 2,5 | 102,3 | 4,5 | 88,9 | 226 |
| 2 | 0,3 | 2,3 | 102,3 | 4,7 | 87,0 | 210 |
| 3 | 0,3 | 2,3 | 102,5 | 5,2 | 86,0 | 211 |
| 4 | 0,3 | 2,3 | 101,9 | 4,9 | 86,0 | 213 |
| 5 | 0,3 | 2,2 | 102,3 | 4,8 | 87,2 | 210 |
| 6 | 0,3 | 2,3 | 102,5 | 4,8 | 87,6 | 214 |
| 7 | 0,3 | 2,3 | 102,6 | 4,9 | 87,0 | 213 |
| 8 | 0,3 | 2,2 | 102,2 | 4,5 | 88,1 | 216 |
| 9 | 0,3 | 2,8 | 101,0 | 5,2 | 84,9 | 208 |
| 10 | 0,3 | 2,5 | 102,4 | 4,4 | 89,6 | 219 |
| 11 | 0,3 | 2,4 | 102,7 | 4,4 | 88,1 | 215 |

\*   Compounds aus APS und 6 % eines 5 %igen Stabilisator-Konzentrats auf Basis APS.
    Hergestellt bei einer Massetemperatur von 220°C.

\*\*   Viskositätzahl

EP 0 678 550 A2

Tabelle 4

Thermostabilität von anionischem Polystyrol; Prüfung verschiedener Konzentrationen von Verbindung 1
Ausgangsmaterial APS: $\overline{M}_w/\overline{M}_n = 2$; $MVR_{200/5} = 1,4$ ml/10 min; 7 ppm Monostyrol;
Crash-Extrusion im Doppelschneckenextruder: Massetemperatur 280°C, mittlere Verweilzeit  (VWZ)
72 sec., minimale VWZ 70 sec., maximale VWZ 74 sec.

| Konzentration von (1) im Compound* [%] | Styrolgehalt [ppm ] | Zahl der Extrusionen | | |
|---|---|---|---|---|
| | | 1 x [ppm Styrol] | 3 x [ppm Styrol] | 5 x [ppm Styrol] |
| unstabilisiert | 35 | 165 | 250 | 310 |
| 0,05 | 8 | 65 | 105 | 130 |
| 0,1 | 8 | 30 | 55 | 70 |
| 0,2 | 8 | 16 | 25 | 35 |
| 0,3 | 9 | 12 | 15 | 19 |

* Compounds aus APS und 0 - 6 % eines 5 %igen Konzentrats von Verbindung 1 in APS.
  Hergestellt bei 220°C Massetemperatur.

EP 0 678 550 A2

Tabelle 5

Thermostabilität von PS
Ausgangsmaterial PS: $\overline{M}_w/\overline{M}_n$ = 2, MVR 200/5 = 1,8 ml/10 min, Monostyrol = 90 ppm, VZ = 108,5 ml/g
Crash-Extrusion im Doppelschneckenextruder: Massetemperatur 280°C, mittlere Verweilzeit (VWZ)
72 sec., minimale VZW 70 sec., maximale VWZ 74 sec.

| Konzentration von (1) im Compound* [%] | MVR 200/5 [ml/10min] | VZ [ml/g] | Mono-styrol [ppm] | 1 x Crash-Extr. MVR 200/5 [ml/10min] | VZ [ml/g] | Mono-styrol [ppm] | 3 x Crash-Extr. MVR 200/5 [ml/10min] | VZ [ml/g] | Mono-styrol [ppm] |
|---|---|---|---|---|---|---|---|---|---|
| 0 | 2,7 | 102,5 | 110 | 3,7 | 98 | 260 | 4,8 | 91,5 | 380 |
| 0,05 | 2,0 | 104,3 | 90 | 2,8 | 101,7 | 115 | 3,7 | 94,5 | 165 |
| 0,1 | 2,0 | 104,9 | 90 | 2,6 | 102,4 | 95 | 3,6 | 95,7 | 110 |
| 0,2 | 1,9 | 105,4 | 90 | 2,6 | 103,0 | 90 | 3,4 | 95,5 | 95 |
| 0,3 | 1,9 | 105,5 | 90 | 2,6 | 99,9 | 85 | 3,4 | 92,8 | 90 |

\*     Compounds aus PS und 0 - 6 % eines 5 %igen Konzentrats von Verbindung 1 in PS.
Hergestellt bei 220°C Massetemperatur.

EP 0 678 550 A2

Tabelle 6

Thermostabilität von Standard PS
Mischungen von unstabilisiertem Standard PS mit 5 %igem Konzentrat von Verbindung 1 (MB)
Ausgangsmaterial: PS VZ 108,5 ml/g; $MVR_{200/5}$= 2,3 ml/10 min; 90 ppm Monostyrol
Crash-Extrusion im Doppelschneckenextruder: Massetemperatur 280°C, mittlere Verweilzeit (VWZ)
72 sec.; minimale VZW 70 sec.; maximale VWZ 74 sec.

| PS/Konzentrat Mischungsverhältnis | Konzentration Verbindung 1 (%) | 1 x Crash-Extr. | | | 3 x Crash-Extr. | | |
|---|---|---|---|---|---|---|---|
| | | MVR 200/5 [ml/10min] | VZ [ml/g] | Monostyrol [ppm] | MVR 200/5 [ml/10min] | VZ [ml/g] | Monostyrol [ppm] |
| PS/MB 100/0 | - | 2,6 | 100,7 | 210 | 4,2 | 93,8 | 380 |
| PS/MB 99/1 | 0,1 | 2,4 | 100,9 | 115 | 3,4 | 94,2 | 150 |
| PS/MB 94/6 | 0,3 | 2,5 | 101,6 | 90 | 3,6 | 92,4 | 90 |

EP 0 678 550 A2

EP 0 678 550 A2

Tabelle 7

| Thermostabilität von radikalisch polymerisiertem Standard-Polystyrol (Viskositätszahl: 104 ml/g) Spritzgußverarbeitung bei verschiedenen Massetemperaturen; Gehalt an Monostyrol [ppm] | | | |
|---|---|---|---|
| | Polystyrol ohne Stabilisator | Polystyrol mit 0,3 Gew.-% Stabilisator 7 (Zugabe bei der Polymerisation) | Polystyrol mit 0,3 Gew.-% Stabilisator 7 (Zugabe in vorentgastes Polystyrol (- 1000 ppm Styrolgehalt) |
| Styrolgehalt vor Verarbeitung | 115 | 110 | 85 |
| Styrolgehalt nach Spritzguß bei T = [°C] 220 | 122 | 165 | 85 |
| 250 | 176 | 184 | 97 |
| 280 | 357 | 342 | 105 |

Aus den Angaben der Tabelle 7 wird deutlich, daß unstabilisiertes Polystyrol mit einem Styrolgehalt von 115 ppm bei einer Spritzgußverarbeitung schnell wieder bis zu ca. 250 ppm Styrol neu bildet.

Setzt man den Stabilisator bereits im Polymerisationsreaktor zu, so besitzt er praktisch keine stabilisierende Wirkung mehr.

Die Zugabe von Stabilisator in vorentgastes Polystyrol bewirkt, daß die Styrolmenge im Granulat geringer bleibt, und daß bei der Verarbeitung die Neubildung von Styrol weitgehend verhindert wird, d.h. bei dieser bevorzugten Zugabeart des Stabilisators bleibt dessen stabilisierende Wirkung erhalten.

Stabilisierung von Polystyrol bei Entgasung im Extruder (vgl. Tab. 8)

Eine Extruderentgasung bedeutet erfahrungsgemäß eine besonders hohe Belastung des Polystyrol. Durch den Zusatz von 0,1 % an Verbindung 7 kann die Monomerbildung sowohl bei mittlerer als auch bei hoher Extruderdrehzahl wirksam verringert werden.

Eine 85 gew.-%ige Lösung des APS in Cyclohexan wurde bei T = 140°C mittels einer Zahnradpumpe einem Entgasungsextruder zugeführt. Die Massetemperatur am Extruderaustritt betrug 220°C. Der Extruder besaß drei Entgasungsdome, die bei 500, 200 bzw. 100 mbar betrieben wurden.

Tabelle 8

| Stabilisierung von APS bei der Extruderentgasung (APS: $\overline{M}_n$ = 200 000 g/mol; $\overline{M}_w/\overline{M}_n$ = 1,1) | | | |
|---|---|---|---|
| Extruderdrehzahl (Upm) | 150 | | 250 | |
| | unstabilisiert | mit 0,1 Gew.-% Verbindung 7 | unstabilisiert | mit 0,1 Gew.-% Verbindung 7 |
| Styrolgehalt (ppm) | 80 | 15 | 145 | 30 |

Wanderung (Migration) von Styrol

Der Begriff der Organoleptik (Wahrnehmbarkeit) ist nicht quantifizierbar, weil die Beurteilung des Ausmaßes einer geschmacklichen oder geruchlichen Beeinflussung eines Lebensmittels subjektiv ist.

Die Ursache der Organoleptik des Styrols liegt aber in seiner Migration aus dem Verpackungsmaterial ins Füllgut. Diese Migration kann unter Berücksichtigung der EG-Richtlinie 87/711 mit anerkannten Methoden gemessen und angegeben werden.

Entsprechende Messungen wurden an einem hochentgasten schlagfesten Polystyrol (I) mit einem Styrolgehalt von 65 ppm vorgenommen und mit Polystyrol (II), das noch 440 ppm Styrol enthielt, verglichen.

Als Prüfmedien, in die die Einwanderung von Styrol bestimmt wurde, dienten ein synthetisches Fett (HB 307), 3 %ige Essigsäure in Wasser.

Hochentgastes schlagfestes Polystyrol mit einem Styrolgehalt von 65 ppm, das zur Bestimmung der Migration verwendet wurde, wurde nach (s. A. Echte, Advances in Chemistry, Series 222 "Rubber-Toughend Styrene Polymers, Fig. 27, Seite 39 hergestellt), wobei ein Schleppmittel zur Entgasung verwendet wurde. Das schlagfeste Polystyrol hatte einen Polybutadiengehalt von 8 %, eine Zellteilchenmorphologie mit einer mittleren Teilchengröße von 2,7 $\mu$m, eine Viskositätszahl von 69 ml/g und enthielt kein Mineralöl.

Das zum Vergleich verwendete schlagfeste Polystyrol mit 440 ppm Styrol wurde auf die gleiche Art und Weise ohne Schleppmittel erhalten.

Tabelle 9

| Migration von Styrol (Lagerbedingungen: 10 Tage bei 40°C) | | |
|---|---|---|
| | Polystyrol I (65 ppm) | Polystyrol II (440 ppm) |
| Migration [$\mu$g/dm$^2$] in HB 307 | 3,8 | 24,1 |
| Essigsäure (3 %) | < 0,08 | 0,5 |
| Wasser | < 0,08 | 0,3 |

Tabelle 9 zeigt deutlich, daß sich die Migration von Styrol in Lebensmittel signifikant verringern läßt, wenn der Styrolgehalt im Verpackungsgegenstand gering ist.

Man erkennt, daß die Migration in ein fetthaltiges Lebensmittel höher ist als in ein wasserhaltiges.

Günstig ist, daß die als Stabilisator bevorzugt verwendete Verbindung (1) selbst praktisch nicht in Margarine migriert [K. Cwiek, Rocz. Panstw. Zakl. Hig., 37 (1), 44 - 47] und nur in sehr geringem Ausmaß in Petrolether oder Diethylether, die als Modellsubstanzen für fetthaltige Lebensmittel eingesetzt wurden [K. Cwiek et al, Rocz. Panstw. Zakl. Hig., 36 (5), 406 - 410]:

Nach Ind. Eng. Chem. Res. 26, 1668 - 1670 (1987) beträgt der Diffusionskoeffizient des Stabilisators 1 in schlagfestem Polystyrol $3 \cdot 10^{-13}$ cm$^2$/s; das bedeutet, daß "in den meisten Fällen, für typische Lagerzeiten weniger als 2 $\mu$g/dm$^2$ und oft weniger als 1 $\mu$g/dm$^2$ migriert".

Somit kann der technische Fortschritt, der durch die Erfindung erreicht wird wie folgt zusammengefaßt werden: die Styrolmigration wird drastisch gesenkt, in einigen Fällen bis unter die Nachweisgrenze und es kommt keine signifikante neue Migration hinzu, d.h. die Gesamtmigration aus einem Verpackungsgegenstand aus Polystyrol in Lebensmittel ist deutlich geringer.

**Patentansprüche**

1. Formmasse enthaltend, neben Polystyrol als wesentlichem Bestandteil, weniger als 250 ppm Styrol und 0,05 - 0,5 Gew.-% mindestens eines phenolischen Antioxidans.

2. Formmasse nach Anspruch 1, enthaltend ein 2,4,6-tri-substituiertes Phenol.

3. Verfahren zur Stabilisierung von Polystyrol mit einem Gehalt von weniger als 250 ppm Styrol gegen die Neubildung von Styrol unter Wärmeeinwirkung, dadurch gekennzeichnet, daß man dem Polystyrol 0,05 bis 0,5 Gew.-% mindestens eines phenolischen Antioxidans zusetzt.

4. Verfahren nach Anspruch 3, dadurch gekennzeichnet, daß man monomerhaltigem Polystyrol mit einem Gehalt von weniger als 0,3 Gew.-% Styrol, 0,05 bis 0,5 Gew.-% eines schwerflüchtigen phenolischen Antioxidans zusetzt, die Mischung von Styrol und gegebenenfalls Lösungsmittel befreit und dann 0,05 bis 0,5 Gew.-% 2,6-Di-tert-butyl-4-methylphenol zusetzt.